Europäisches Patentamt

(19) European Patent Office

Office européen des brevets

(11) Veröffentlichungsnummer: **0 013 872**
**B1**

(12) EUROPÄISCHE PATENTSCHRIFT

(45) Veröffentlichungstag der Patentschrift:
19.10.83

(21) Anmeldenummer: 80100004.3

(22) Anmeldetag: 02.01.80

(51) Int. Cl.³: **B 29 B 1/04,** C 08 J 3/20,
C 08 L 23/02, C 08 K 3/04,
H 01 B 1/04

(54) Verfahren zum Herstellen kleinteiliger, mit Leitfähigkeitsruss versehener Polyolefin-Formmassen und deren Verwendung zur Herstellung von Formkörpern.

(30) Priorität: 18.01.79 DE 2901776

(43) Veröffentlichungstag der Anmeldung:
06.08.80 Patentblatt 80/16

(45) Bekanntmachung des Hinweises auf die Patenterteilung:
19.10.83 Patentblatt 83/42

(84) Benannte Vertragsstaaten:
AT BE DE FR GB IT NL

(56) Entgegenhaltungen:
EP-A-0 011 240
EP-A-0 011 241
EP-A-0 011 242
DE-B-1 283 506
FR-A-2 310 851
GB-A-1 447 304
US-A-4 045 403

(73) Patentinhaber: BASF Aktiengesellschaft,
Carl-Bosch-Strasse 38, D-6700 Ludwigshafen (DE)

(72) Erfinder: Theysohn, Rainer, Dr., Bruesseler Ring 38,
D-6700 Ludwigshafen (DE)
Erfinder: Zeitler, Gerhard, Dr., Lessingstrasse 11,
D-6711 Hessheim (DE)
Erfinder: Weiss, Frank, Dr., Gontardstrasse 4,
D-6800 Mannheim (DE)
Erfinder: Willing, Hans, im Salzbrunnen 1, D-6702 Bad
Duerkheim 1 (DE)
Erfinder: Seiler, Erhard, Dr., Erpolzheimer Strasse 1,
D-6700 Ludwigshafen (DE)

**0 013 872**

### Verfahren zum Herstellen kleinteiliger, mit Leitfähigkeitsruß versehener Polyolefin-Formmassen und deren Verwendung zur Herstellung von Formkörpern

Die Erfindung betrifft ein Verfahren zur Herstellung kleinteiliger, mit Leitfähigkeitsruß versehener Polyolefin-Formmassen. Diese sind aufgebaut aus (a) 100 Gewichtsteilen eines kleinteiligen, teilkristallinen Polyolefins, das einen mittleren Teilchendurchmesser im Bereich von 10 bis 5000 µm hat und einen Staudinger-Index $[\eta]$, gemessen in Decalin bei 130°C, im Bereich von 0,5 bis 15 aufweist, (b) 1 bis 30 Gewichtsteilen eines Leitfähigkeitsrußes, der einen mittleren Teilchendurchmesser von 10 bis 50 nm hat und gegebenenfalls (c) üblichen Mengen anderer Zusatzstoffe bzw. Hilfsstoffe.

Bei derartigen ungeformten Polyolefin-Formmassen, die mit Ruß versehen sind, handelt es sich um Massen, die in üblichen Verfahren wie im Spritzguß oder durch Extrusion zu geformten Polyolefin-Formkörpern verarbeitet werden können.

Die Ausrüstung von Polyolefinmassen mit Leitfähigkeitsrußen ist ein bewährtes Verfahren zur Herabsetzung des Oberflächenwiderstandes daraus hergestellter Formkörper. Dadurch wird die Gefahr einer elektrostatischen Aufladung praktisch eliminiert. Solche Produkte finden vor allem dort Anwendung, wo die Gefahr der Funkenbildung infolge elektrostatischer Aufladung besteht, wodurch leichtentzündliche Stoffe in Brand gesetzt oder explodieren können. Die Verwendung antistatisch ausgerüsteter Gebinde ist daher z. B. in Ex-geschützten Räumen zwingend vorgeschrieben.

Die Einbringung von Leitfähigkeitsruß in das Polymere geschieht in der Praxis so, daß der Leitfähigkeitsruß in das vollständig aufgeschmolzene Polymere unter Scherung eingemischt wird. Dies kann auf den für die Thermoplastkonfektionierung üblichen Schneckenknetern, Extrudern oder Innenmischern erfolgen. Nicht unproblematisch ist hierbei die exakte Dosierung des meist zum Stauben neigenden leitfähigen Additivs, vor allem aber die hierbei auftretende sehr lästige Verschmutzung der Maschinen und des Personals.

Die Einarbeitung von Leitfähigkeitsrußen in Polyolefine nach den bekannten Verfahren führt durchweg zu einer erheblichen Verschlechterung der Fließfähigkeit, so daß es wünschenswert ist, mit möglichst wenig Leitfähigkeitsruß auszukommen.

Da bei der üblichen Einmischung von Additiven in geschmolzene Polyolefine zwangsläufig hohe Scherkräfte auftreten, ist dieses Verfahren zudem nicht geeignet bei solchen Polyolefinen, die wegen ihres hohen Molekulargewichts durch Scherung irreversibel geschädigt werden.

Aus der US-A-4 045 403 ist es bereits bekannt, eine kleinteilige Ausgangsmischung aus einem Polyolefin und Füllstoffpulver in einem Mischer durch Mischen bis über die Kristallitschmelztemperatur des verwendeten Polyolefins unter Aufnahme und Verteilung des Füllstoffs an der Polyolefinoberfläche zu erhitzen und anschließend abzukühlen. Der Mischvorgang kann dabei zwischenzeitlich abgestoppt und so lange ausgesetzt werden, bis die mit Füllstoff besetzte Polyolefinoberfläche erstarrt ist; anschließend wird erneut gemischt bis über die Kristallitschmelztemperatur des Polyolefins, der Mischvorgang ausgesetzt, abgekühlt, erneut gemischt usw. Bei diesem bekannten Verfahren wird laufend mit Füllstoff beladenes Polymermaterial von der Oberfläche der Polymerteilchen abgeschmolzen, wobei kontinuierlich neue Teilchen entstehen, bei denen der Füllstoff homogen verteilt in der Polyolefinmatrix vorliegt. Es wird von kleinen Partikeln ausgegangen und ein Endprodukt erhalten, das in der Regel eine andere Korngröße aufweist. Das bekannte Verfahren weist den Nachteil auf, daß bei Verwendung von Leitfähigkeitsruß nach Verarbeitung ein Halbzeug erhalten wird, in dem der Leitfähigkeitsruß homogen in der Masse verteilt ist. Die elektrische Leitfähigkeit derartiger Halbzeuge ist aber nur sehr gering. Außerdem werden gemäß der US-Patentschrift relativ hohe Mengen an Additiv verbraucht und eingemischt, was eine negative Beeinflussung der mechanischen Eigenschaften des Halbzeugs zur Folge hat.

Aufgabe der Erfindung war es, ein kostengünstiges, sauberes, apparativ einfaches und exaktes Verfahren zum Einbringen von Leitfähigkeitsruß in Polyolefin-Formmassen zu entwickeln, das die Nachteile des Standes der Technik vermeidet und zu gefüllten Formmassen führt, die sich leicht zu homogenen Formkörpern hoher Qualität verarbeiten lassen.

Die Aufgabe wurde erfindungsgemäß dadurch gelöst, daß man die Komponenten (a) — kleinteiliges, teilkristallines Polyolefin — (b) — Leitfähigkeitsruß — und gegebenenfalls (c) — andere Zusatz- und Hilfsstoffe — in einer ersten Arbeitsstufe (I) in einem Mischer — gegebenenfalls unter Zu- oder Abfuhr kalorischer Wärme — mischt, wobei in einer ersten Unterstufe (I.1) bei einer Mischintensität im Bereich von 100 bis 500 W/l Nutzinhalt innerhalb einer Zeitspanne von 2 bis 50 Minuten von Umgebungstemperatur — die unterhalb der Kristallitschmelztemperatur des Polyolefins (a) liegt und insbesondere Raumtemperatur ist — auf die Kristallitschmelztemperatur des Polyolefins (a) bringt; unmittelbar darauf im Verlauf einer zweiten Unterstufe (I.2) auf eine Mischintensität übergeht, die 0,3 bis 0,8mal so groß ist wie die Mischintensität in der ersten Unterstufe (I.1), und innerhalb einer Zeitspanne von 0,2 bis 20 Minuten von der Kristallitschmelztemperatur des Polyolefins (a) auf eine 3 bis 40°C darüber liegende Temperatur bringt, unmittelbar hiernach — gegebenenfalls — in einer dritten Unterstufe (I.3) auf eine Mischintensität übergeht, die 0,5 bis 1,0mal so groß ist wie die Mischintensität in der zweiten Unterstufe (I.2) und für eine Zeitspanne von 0,2 bis 10 Minuten auf der in Unterstufe (I.2) erreichten Temperatur hält; und unmittelbar anschließend

2

**0 013 872**

in einer zweiten Arbeitsstufe (II) innerhalb einer Zeitspanne von 0,5 bis 30 Sekunden aus dem Mischer austrägt und innerhalb von 120 Sekunden auf eine Temperatur unterhalb der Kristallitschmelztemperatur des Polyolefins (a) bringt, wobei feinteilige, frei fließende Formmassen mit ähnlicher Kornverteilung wie der des eingesetzten Polyolefins resultieren.

Unter kleinteiligen, teilkristallinen Polyolefinen (a) werden solche verstanden, die einen Teilchendurchmesser im Bereich von 10 bis 5000, vorzugsweise 100 bis 2000 μm aufweisen und deren Staudinger-Index (gemessen nach DIN 53 728 in Decalin bei 130°C) im Bereich von 0,5 bis 15, vorzugsweise 1 bis 10 liegt. Bei den Polyolefinen handelt es sich vorzugsweise um Polyäthylen hoher Dichte (0,93 bis 0,97 g/cm$^3$) und um Polypropylen, insbesondere um ein solches, das nach dem Gasphasenverfahren, wie z. B. in der DE-B-1 217 071 beschrieben, hergestellt wurde, Copolymere von Äthylen und Propylen sofern sie noch kristalline Anteile enthalten, sowie um entsprechende Polymere, die bis zu 5 Gewichtsprozent Acrylsäure aufgepropft enthalten.

Unter teilkristallinen Polyolefinen seien solche verstanden, die bei der DSC-Analyse zumindest einen scharfen Schmelzpeak aufweisen.

Der Leitfähigkeitsruß (b) soll einen mittleren Teilchendurchmesser von 10 bis 50, vorzugsweise von 13 bis 40 nm aufweisen. Unter Leitfähigkeitsruß wird hierbei ein Ruß verstanden, der neben dem angegebenen Teilchengrößenbereich eine DBP-Adsorption im Bereich von 100 bis 500 ml/100 g aufweist (ml Dibutylphthalat pro 100 g Ruß nach ASTM D 2414-T) und eine BET-Oberfläche ($N_2$) zwischen 50 und 1200 m²/g besitzt. (J. Amer. Chem. Soc. 60, 309 (1938).

Als Hilfs- und Zusatzstoffe (c) kommen in Frage: Stabilisatoren, Verarbeitungshilfsmittel wie Gleit- und Entformungsmittel, Haft- und Verträglichkeitsvermittler und Treibmittel.

Die Herstellung der Formmassen kann erfolgen in einem Mischer, in dem die Mischflügel senkrecht zur Mischerachse angeordnet sind und wie er z. B. in der DE-B-1 054 073 oder DE-B-1 454 768 beschrieben ist. Derartige Mischer wurden bisher hauptsächlich zur Aufbereitung von nichtkristallinen Thermoplasten mit breitem Erweichungsbereich wie PVC oder auch ABS eingesetzt. Sie sind aber auch zum Agglomerieren von schlecht fließfähigen, feinteiligen Polyolefinen mit breiter Kornverteilung geeignet, wobei ein verengtes gröberes Kornspektrum und ein höheres Schüttgewicht resultiert, so daß auf diese Weise das Verarbeitungsverhalten verbessert werden kann. Es ist zudem bekannt, daß das Agglomerieren von Kunststoffpartikeln auch in Gegenwart von Zuschlagstoffen geschehen kann. Der Beschreibung der DE-A-2 302 370 ist zu entnehmen, daß bei der Aufbereitung von Polyolefinpulvern in schnellaufenden Mischern, die maximale Temperatur 2 bis 13°C unterhalb des Schmelzbereichs des Polyolefins liegen sollte, um ein Verkleben bzw. Verklumpen zu vermeiden.

Überraschend wurde nun gefunden, daß es nach dem erfindungsgemäßen Verfahren möglich ist, auch im Temperaturbereich oberhalb des Kristallitschmelzpunktes des betreffenden Polyolefins zu arbeiten, ohne daß eine nennenswerte Agglomeration oder sogar Klumpenbildung stattfindet, wobei es möglich ist, Leitfähigkeitsruß vollständig und irreversibel an die Polyolefinkomponente zu binden. Es resultieren hierbei feinteilige, frei fließende Formmassen mit ähnlicher Kornverteilung wie der des eingesetzten Polyolefins, welche den Ruß (b) vollständig gebunden enthalten und die sich leicht d. h. mit guter Fließfähigkeit zu Formkörpern weiterverarbeiten lassen.

Das erfindungsgemäße Verfahren wird vorzugsweise so ausgeführt, daß man in einer ersten Stufe (I.1) das Gemisch aus (a), (b) und gegebenenfalls (c) mit einer Mischintensität von 200 bis 400 W/l Nutzinhalt innerhalb von 5 bis 20 Minuten von Umgebungstemperatur, die üblicherweise Raumtemperatur ist, auf die Kristallitschmelztemperatur des Polyolefins bringt, anschließend im Verlauf einer zweiten Stufe (I.2) auf eine Mischintensität übergeht, die 0,4 bis 0,7mal so groß ist wie die Mischintensität bei (I.1) und innerhalb einer Zeitspanne von 0,5 bis 10 Minuten, von der Kristallitschmelztemperatur des Polyolefins auf eine 5 bis 30°C darüber liegende Temperatur bringt. Die Mischintensität in W/l Nutzinhalt ist dabei definiert als die Energieaufnahme in Watt bezogen auf 1 Liter des Volumens, das die Komponenten (a), (b) und gegebenenfalls (c) im Mischer einnehmen.

Gegebenenfalls kann sich eine dritte Stufe (I.3) anschließen, wobei man auf eine Mischintensität übergeht, die vorzugsweise 0,5 bis 0,8mal so groß ist wie die Mischintensität bei (I.2) und dort innerhalb einer Zeitspanne von vorzugsweise 0,2 bis 5 Minuten bei der in Stufe (I.2) erreichten Temperatur hält.

Anschließend wird in einer zweiten Arbeitsstufe (II) das Produkt innerhalb vorzugsweise 0,5 bis 10 Sekunden aus dem Mischer ausgetragen und auf eine Temperatur unterhalb des Kristallitschmelzpunktes des Polyolefins abgekühlt, wobei feinteilige, frei fließende Formmassen mit ähnlicher Kornverteilung wie der des eingesetzten Polyolefins resultieren.

Es besteht aber auch die Möglichkeit, das Produkt ohne weitere Abkühlung durch geeignete Vorrichtungen direkt plastisch weiterzuverarbeiten.

Dem beanspruchten Verfahren analoge Verfahrensabläufe sind aus den EP-A-0 011 240 bis 0 011 242 vorbekannt, die jedoch nur Stand der Technik gemäß Artikel 54(3) EPÜ sind und nicht den beim Erfindungsgegenstand verwendeten speziellen Füllstoff beschreiben.

Das beschriebene Verfahren ist apparativ und energetisch weit weniger aufwendig als z. B. eine Extruderkonfektionierung. Es erlaubt zudem eine einfache, saubere und exakte Einbringung der Komponenten Leitfähigkeitsruß und Zuschläge ohne komplizierte Dosiertechnik, zudem staubfrei.

Darüber hinaus hat das Verfahren den Vorteil, daß es möglich ist, Leitfähigkeitsruß in ansonsten

3

schwer verarbeitbare Thermoplaste wie ultrahochmolekulares Polyäthylen ohne Schädigung der Polymeren einzubringen.

Die für eine permanent antistatische Ausrüstung notwendigen Mengen an Leitfähigkeitsruß sind geringer als bei konventioneller Fahrweise. Bei vergleichbarem Gehalt an Leitfähigkeitsruß zeichnet sich zudem das erfindungsgemäß hergestellte Produkt gegenüber einem nach konventionellem Verfahren durch Schmelzmischen hergestellten Produkt durch deutlich günstigere Fließeigenschaften aus.

Die kleinteiligen, mit Leitfähigkeitsrußen versehenen Polyolefin-Formmassen können verwendet werden zur Herstellung von Formkörpern nach den üblichen Spritzguß-, Extrusions- oder Hohlkörperblasverfahren.

Die folgenden Beispiele verdeutlichen das oben genannte Verfahren:

## Beispiel 1

Ausgangsmaterial ist ein Gemisch aus
(a) 25 kg (entsprechend 100 Gewichtsteilen) eines kleinteiligen Polyäthylens, das einen Teilchendurchmesser im Bereich von 250 bis 2000 µm und einen mittleren Teilchendurchmesser von 800 µm hat und einen Staudinger-Index von 4,8 aufweist und (b) 1,6 kg (entsprechend 6,4 Gewichtsteilen) Leitfähigkeitsruß vom Typ Ketjen-BLACK EC 10 (der Firma AKZO, Niederlande). Das vorgenannte Gemisch wird (1) in einer ersten Unterstufe in einem Mischer von 100 l Nutzinhalt — ohne äußere Zu- oder Abfuhr kalorischer Wärme —, (I.1) in einer ersten Unterstufe bei einer Mischintensität von 230 W/l Nutzinhalt innerhalb einer Zeitspanne von 10,5 Minuten von Umgebungstemperatur ( = Raumtemperatur) auf die Kristallitschmelztemperatur des Polyäthylens (a) ( = 138° C) gebracht; unmittelbar darauf (I.2) im Verlauf einer weiteren Unterstufe bei einer Mischintensität, die im Mittel 0,52mal so groß ist wie die Mischintensität in der ersten Unterstufe (I.1), innerhalb einer Zeitspanne von 4 Minuten von der Kristallitschmelztemperatur des Polyäthylens (a) auf eine 32° C darüber liegende Temperatur ( = 170° C) gebracht, und unmittelbar hiernach (II) in einer zweiten Arbeitsstufe innerhalb einer Zeitspanne von 5 Sekunden aus dem Mischer ausgetragen und innerhalb von 35 Sekunden auf eine Temperatur ( = 80° C) unterhalb der Kristallitschmelztemperatur des Polyäthylens (a) gebracht.

## Beispiel 2 (Vergleichsbeispiel)

In einem Zweischneckenkneter vom Typ ZSK der Fa. Werner und Pfleiderer wurden 25 kg (entsprechend 100 Gewichtsteilen) eines kleinteiligen Polyäthylens mit den gleichen Kenndaten wie in Beispiel 1 und 1,6 kg (entsprechend 6,4 Gewichtsteilen) Ketjen-Black EC 10 getrennt kontinuierlich zudosiert, wobei bei Temperaturen um 250° C der Leitfähigkeitsruß mit dem schonend aufgeschmolzenen Polyäthylen gemischt wurde. Das homogene Gemisch wurde als Strang ausgetragen, gekühlt und granuliert.

Von den in Beispiel 1 und 2 erhaltenen Produkten wurde der Schmelzindex (Spalte 1), und die Verarbeitbarkeit auf einem Extruder mit Hohlkörperblaseinrichtung vom Typ KAUTEX V 8 (Schneckendurchmesser 40 mm, 18 D mit genuteter Einzugszone) zu 100 ml-Flaschen unter Standardbedingungen (Massetemperatur 220° C, Blaskopf ohne Staueinrichtung) geprüft (Spalte 2).

Auf der gleichen Maschine, jedoch unter modifizierten Bedingungen (240° C Massetemperatur, Staukopf) wurden Flaschen mit einem Volumen von 100 ml hergestellt, an denen der Oberflächenwiderstand nach DIN 53 482 im Bereich der zylindrischen Seitenwand bestimmt wurde (Spalte 3). Die Ergebnisse sind in der Tabelle zusammengefaßt.

Tabelle

| Formmassen aus: | Schmelzindex 21,6 kg/190°C<br><br>g/10 min | Verarbeitung | Oberflächen-widerstand<br><br>Ohm |
|---|---|---|---|
| Beispiel 1 | 0,95 | unter Standardbedingungen (220°C Massetemperatur ohne Staukopf) einwandfreie Formkörper | $3 \cdot 10^7$ |
| Beispiel 2 (Vergleichsbeispiel) | 0,50 | unter Standardbedingungen (s. o.) keine Formkörper herstellbar | $10^{12}$ |

Wie aus der Tabelle ersichtlich, zeichnet sich das nach dem erfindungsgemäßen Verfahren hergestellte Produkt (Beispiel 1) im Vergleich zu einem mit herkömmlicher Technologie hergestellten Produkt (Beispiel 2) durch ein günstigeres Fließverhalten, eine deutlich bessere Verarbeitbarkeit und durch einen geringeren Oberflächenwiderstand im Sinne einer guten antielektrostatischen Wirkung aus.

## Patentansprüche

1. Verfahren zum Herstellen kleinteiliger, mit Leitfähigkeitsruß versehener Polyolefin-Formmassen, die aufgebaut sind aus

a)  100 Gewichtsteilen eines kleinteiligen, teilkristallinen Polyolefins, das einen mittleren Teilchendurchmesser im Bereich von 10 bis 5000 µm hat und einen Staudinger-Index $[\eta]$, gemessen in Decalin bei 130° C, im Bereich von 0,5 bis 15 aufweist.
b)  1 bis 30 Gewichtsteilen eines Leitfähigkeitsrußes, der einen mittleren Teilchendurchmesser von 10 bis 50 nm hat und gegebenenfalls
c)  üblichen Mengen üblicher anderer Zusatz- bzw. Hilfsstoffe,

dadurch gekennzeichnet, daß man die Komponenten (a) und (b) sowie — gegebenenfalls — (c) in einer ersten Arbeitsstufe (I) in einem Mischer — gegebenenfalls unter Zu- oder Abfuhr kalorischer Wärme — mischt, wobei in einer ersten Unterstufe (I.1) bei einer Mischintensität im Bereich von 100 bis 500 W/l Nutzinhalt innerhalb einer Zeitspanne von 2 bis 50 Minuten von Umgebungstemperatur — die unterhalb der Kristallitschmelztemperatur des Polyolefins (a) liegt und insbesondere Raumtemperatur ist — auf die Kristallitschmelztemperatur des Polyolefins (a) bringt; unmittelbar darauf im Verlauf einer zweiten Unterstufe (I.2) auf eine Mischintensität übergeht, die 0,3 bis 0,8mal so groß ist wie die Mischintensität in der ersten Unterstufe (I.1), und innerhalb einer Zeitspanne von 0,2 bis 20 Minuten von der Kristallitschmelztemperatur des Polyolefins (a) auf eine 3 bis 40° C darüber liegende Temperatur bringt; unmittelbar hiernach — gegebenenfalls — in einer dritten Unterstufe (I.3) auf eine Mischintensität übergeht, die 0,5 bis 1,0mal so groß ist wie die Mischintensität in der zweiten Unterstufe (I.2), und für eine Zeitspanne von 0,2 bis 10 Minuten auf der in Unterstufe (I.2) erreichten Temperatur hält; und unmittelbar anschließend in einer zweiten Arbeitsstufe (II) innerhalb einer Zeitspanne von 0,5 bis 30 Sekunden aus dem Mischer austrägt und innerhalb von 120 Sekunden auf eine Temperatur unterhalb der Kristallitschmelztemperatur des Polyolefins (a) bringt, wobei feinteilige, frei fließende Formmassen mit ähnlicher Kornverteilung wie der des eingesetzten Polyolefins resultieren.

2. Verwendung kleinteiliger, mit Leitfähigkeitsruß versehener Polyolefin-Formmassen nach Anspruch 1 zur Herstellung antistatisch ausgerüsteter Formkörper nach üblichen Spritzguß-, Extrusions- und Hohlkörperblasverfahren, wobei die Formkörper einen Oberflächenwiderstand von $< 10^{10}$ Ohm haben.

## Claims

1. A process for the preparation of finely divided polyolefin molding materials which contain conductive carbon black and comprise

a)  100 parts by weight of a finely divided partially crystalline polyolefin which has a mean particle diameter of from 10 to 5000 µm and a Staudinger index $[\eta]$, measured in decahydronaphthalene at 130° C, of from 0.5 to 15, and
b)  from 1 to 30 parts by weight of a conductive carbon black which has a mean particle diameter of from 10 to 50 nm, with or without
c)  conventional amounts of other conventional additives or auxiliaries,

wherein components (a) and (b), with or without (c), are mixed, in a first stage (I), in a mixer, with or without the supply or removal of caloric heat, during which first stage (I), in a first sub-stage (I.1) the mixture is brought, at a mixing intensity of from 100 to 500 W/l of useful capacity, and within a period of from 2 to 50 minutes, from ambient temperature, which is below the crystallite melting point of the polyolefin (a) and is, in particular, room temperature, to the crystallite melting point of the polyolefin (a), and is immediately thereafter, in the course of a second substage (I.2), subjected to a mixing intensity which is from 0.3 to 0.8 times as great as the mixing intensity in the first sub-stage (I.1) and is brought, within a period of from 0.2 to 20 minutes, from the crystallite melting point of the polyolefin (a) to a temperature which is from 3 to 40° C above this, and, if appropriate, is immediately thereafter, in a third sub-stage (I.3), subjected to a mixing intensity which is from 0.5 to 1.0 times as great as the mixing intensity on the second sub-stage (I.2) and kept for a period of from 0.2 to 10 minutes at the temperature reached in sub-stage (I.2), and immediately thereafter, in a second stage (II), the mixture is discharged from the mixer within a period of from 0.5 to 30 seconds and is brought, within 120 seconds, to a temperature below the crystallite melting point of the polyolefin (a), finely divided, free-flowing molding materials, which have a similar particle size distribution to that of the polyolefin employed, being obtained.

2. The use of finely divided polyolefin molding materials containing conductive carbon black as claimed in claim 1 for the manufacture of antistatic moldings by conventional injection molding, extrusion and blow-molding process, the moldings having a surface resistance of $< 10^{10}$ $\Omega$.

## Revendications

1. Procédé de préparation de matières à mouler en polyoléfines contenant un noir de carbone conducteur et en petite particules, constituées de

a) 100 Parties en poids d'une polyoléfine partiellement cristalline en petite particules, ayant un diamètre de particule moyen dans l'intervalle de 10 à 5000 microns et présentant un indice de Staudinger $[\eta]$ mesuré dans la décaline à 130° C, dans l'intervalle de 0,5 à 15.

b) 1 à 30 parties en poids d'un noir de carbone conducteur ayant un diamètre de particule moyen de 10 à 50 nm, et le cas échéant

c) d'autres additifs et produits auxiliaires usuels aux quantités habituelles,

caractérisé en ce que l'on mélange les composants a) et b) et le cas échéant c) dans une première étape opératoire I dans un mélangeur — éventuellement avec apport ou évacuation de chaleur —, au cours de laquelle, dans une première sous-étape I.1, on porte la polyoléfine (a) de la température environnante — qui est inférieure à la température de fusion de cristallite de la polyoléfine (a) et est en particulier la température ambiante — à la température de fusion de cristallite de la polyoléfine (a) à une puissance de mélange dans l'intervalle de 100 à 500 W/l de capacité utile et en une durée de 2 à 50 minutes; immédiatement après dans le cours d'une deuxième sous-étape I.2, on passe à une puissance de mélange représentant 0,3 à 0,8 fois celle observée dans la première sous étape I.1 et on porte dans un délai de 0,2 à 20 minutes de la température de fusion de cristallite de la polyoléfine (a) à une température supérieure à celle-ci de 3 à 40°C; immédiatement après —le cas échéant — dans une troisième sous étape I.3, on passe à une puissance de mélange représentant 0,5 à 1,0 fois celle observée dans la deuxième sous-étape I.2 et on maintient pendant une durée de 0,2 à 10 minutes la température atteinte dans la sous-étape I.2; et immédiatement après dans une deuxième étape opératoire II, on évacue du mélangeur dans un délai de 0,5 à 30 secondes et on porte dans un délai de 120 secondes à une température inférieure à la température de fusion de cristallites de la polyoléfine (a), formant ainsi des matières à mouler qui s'écoulent librement et avec une granulométrie analogue à celle de la polyoléfine mise en oeuvre.

2. Utilisation des matières à mouler en polyoléfines contenant du noir de carbone conducteur et en petites particules selon la revendication 1 pour la fabrication de corps moulés traités antistatiques par les techniques usuelles de moulage par injection, d'extrusion et de soufflage de corps creux, les corps moulés obtenus ayant une résistance superficielle inférieure à $10^{10}$ ohms.